# EUROPEAN PATENT SPECIFICATION

(11) **EP 1 008 634 B1**
(45) Date of publication and mention of the grant of the patent: **15.10.2003**
(21) Application number: 99122178.9
(22) Date of filing: 05.11.1999
(51) Int. Cl.: C09D 11/00

(54) **Ink jet inks containing star polymer additives**
Tintenstrahldrucktinten, die sternförmige Polymerzusätze enthalten
Encres pour imprimante à jet d'encre contenant comme additifs des polymères en étoile

(30) Priority: 10.12.1998 US 209054
(43) Date of publication of application: 14.06.2000
(73) Proprietor: E.I. DU PONT DE NEMOURS AND COMPANY, Wilmington Delaware 19898 (US)
(72) Inventor: Spinelli, Harry Joseph, Wilmington, Delaware 19802 (US)
(74) Representative: Kimpel, Christine, Dr.

(56) References cited:
- US-A- 4 244 862
- US-A- 5 874 974
- DATABASE WPI Section Ch, Week 199901 Derwent Publications Ltd., London, GB; Class A14, AN 1999-005438 XP002132554 & JP 10 279867 A (FUJI PHOTO FILM CO LTD), 20 October 1998 (1998-10-20)

## Description

### Background of the Invention

This invention relates to aqueous inks for ink jet printers, and more particularly, to aqueous ink jet inks containing a star polymer as an additive to improve optical density and waterfasbriess of the image printed with the ink.

Ink jet printing is a non-impact printing process in which droplets of ink are deposited on a substrate such as paper or transparency film in response to an electronic signal. Low cost and high quality of the output, combined with relatively noise free operation, have made ink jet printers a popular option to other types of printers used.with computers.

Both dyes and pigments have been used as ink colorants for ink jet printers. Pigments are more lightfast and waterfast and are more suitable for applications requiring moisture resistance and greater light stability. Pigmented inks, however, have their own disadvantages. The pigment dispersion needs to be stable; i.e., resistant to flocculation and settling. Stabilization is typically accomplished by an non-ionic technique, in which a polymer having a water soluble section that extends into the aqueous vehicle and provides steric or entropic stabilization. Thus, the inherent waterfastness of pigments is lost to some extent by the use of a. water soluble polymer dispersant. Also, pigmented inks have poor chroma relative to dye based inks and, thus, have not gained wide acceptance for demanding color applications, so called "photo quality" or "photo realistic" printing. Further, pigmented inks are prone to crust in the printhead orifices and form films on the printhead resistors, which negatively affect printhead performance.

JP 10279867 A (Abstract, Database WPl Section Ch, Week 199901 Derwent Publications Ltd., London, GB; Class A14, AN 1999-005438 XP002132554) describes ink jet type oil inks, containing resin particles dispersed in a non-aqueous carrier solvent having a specific electric resistance and dielectric constant and are used for preparing lithographic form plates by means of ink jet printing process. The resin particles contain monofunctional monomers, monofunctional macromonomers and a dispersion stabilizer resin, in which at least three of A-B type polymer block chains composed of block A and block B have bonded with an organic molecule by one polymer terminal of the block A opposite to the terminal bonded with the block B. Nothing is mentioned about the use as aqueous ink for ink jet printer and how to achieve respective properties like e.g. water resistance and good chroma of aqueous inks.

There exists a need for ink jet inks which-have good water resistance and smear fastness, good chroma, good print quality and good pen performance. In particular, with pigment based inks there is a need to maintain the stability of the dispersion while improving waterfastness, optical density and chroma.

### Summary of the Invention

Applicant has found that ink jet inks containing star polymer additives result in improved waterfastness, chroma and optical density of an image printed with the ink. Accordingly, the present invention provides an ink jet ink comprising:
(a) an aqueous vehicle;
(b) a colorant;
(c) a polymeric dispersant and
(d) a star polymer additive.

The inks of the invention are stable, have low viscosity, exhibit excellent print quality, provide excellent smear resistance after drying and good decap or crusting time. They may be used with a variety of ink jet printers such as continuous, piezoelectric, drop-on-demand and thermal or bubble jet drop-on-demand, and are particularly adapted for use in thermal ink jet printers. These inks may also be useful in air brush printing devices.

### Detailed Description of the Invention

The invention provides an ink jet ink composition which is particularly suited for use in ink jet printers in general, and thermal ink jet printers in particular. The ink jet ink composition includes those having soluble colorants (i.e., dyes) and/or insoluble colorants (i.e., pigments and disperse dyes). These inks are stable over long periods, both in storage and in the printer. The inks may be adapted to the requirements of a particular ink jet printer to provide abalance of light stability, smear resistance, viscosity, surface tension, high optical density, and crust resistance.

Aqueous vehicle The aqueous vehicle is water or a mixture of water and at least one water soluble organic solvent. Selection of a suitable mixture depends on requirements of the specific application, such as desired surface tension and viscosity, the selected colorant, drying time of the ink, and the type of substrate onto which the ink will be printed. Representative water-soluble organic solvents that may be selected are disclosed in U.S. Patent 5,085,698. A. mixture of water and a polyhydric alcohol, such as diethylene glycol, is preferred as the aqueous vehicle.

If a mixture of water and a water-soluble solvent is used, the aqueous vehicle usually contains from about 30% to about 95% water with the balance (i.e., 70 to 5%) being the water-soluble solvent. The preferred compositions are approximately 60% to about 95% water, based on the total weight of the aqueous vehicle. The amount of aqueous vehicle in the ink is in the range of approximately 70 to 99.8%, preferably 84 to 99.8%, based on total. weight of the ink when the colorant is a pigment and 80-99.8% when the colorant is a dye.

Colorants The colorant may be a pigment, a dye or A mixture thereof. The pigments are insoluble in the aqueous vehicle whereas the dyes can either be soluble or insoluble in the vehicle, the latter being referred to in the art and in this specification as "dispersed dyes". The term pigment, as understood in the art and used herein, means a colorant that remains in a particulate or crystalline state throughout the printing process. Dyes, however, are colorants that, at some point in the printing process, become soluble.

Dyes: Dyes useful in this invention include anionic, cationic, amphoteric and non-ionic dyes. Such dyes are well known to those of ordinary skill in the art. Anionic dyes are those dyes which in aqueous solution yield colored anions and cationic dyes are those which in aqueous solution yield colored cations. Typically anionic dyes contain carboxylic or sulfonic acid groups as the ionic moiety. Cationic dyes usually contain quaternary nitrogen groups. Amphoteric dyes may be anionic, cationic or have both charges as a function of solution pH. Certain non-ionic dyes have sufficient water solubility to be used in aqueous inks. All types of dyes mentioned above are typically classified by their end use. Some of the more useful classes of dyes in this invention are Acid, Basic, Direct, Food, Disperse, Mordant, Vat, Solvent and Reactive dyes.

The color and amount of dye used in the ink composition is largely a function of choice, being primarily dependent upon the desired color of the print achieved with the ink, the purity of the dye and its strength. Low concentrations of dye may not give adequate color vividness. High concentrations may result in poor printhead performance or unacceptably dark colors. The dye is present in the amount of 0.01 to 20%, by weight, preferably 0.05 to 8%, by weight, more preferably 0.1 to 5%, by weight, based on the total weight of the ink.

Disperse Dyes: Dispersed dyes are essentially dyes that have poor solubility in the aqueous vehicle. The color and amount of disperse dye used in the ink is largely a function of choice, being primarily dependent upon the.desired color of the print achieved with the ink, the purity of the dye, and its strength. Low concentrations of dye may not give adequate color vividness. High concentrations may result in poor printhead performance or unacceptably dark colors. The disperse dye may be present in the amount of 0.01 to 20%, by weight, preferably 0.05 to 8%, by weight, more preferably 1 to 5%, by weight, based on the total weight of the ink. Disperse dyes that may be useful in this invention are disclosed in U.S.5,053,495, U.S.5,203,912, U.S. 5,102,448, etc.

Pigment: In the preferred embodiment of the present invention, the colorant is a pigment. Useful pigments comprise a wide variety of organic and inorganic pigments, alone or in combination. The pigment particles are sufficiently small to permit free flow of the ink through the ink jet printing device, especially at the ejecting nozzles that usually have a diameter ranging from 10 micron to 50 micron. The particle size also has an influence on the pigment: dispersion stability, which is critical throughout the life of the ink. Brownian motion of minute particles will help prevent the particles from settling. It is also desirable to use small particles for maximum color strength. The range of useful particle size is approximately 0.005 micron to 15 micron. Preferably, the pigment particle size should range from 0.005 to 5 micron and most preferably, from 0.01 to 0.3 micron.

The selected pigment may be used in dry or wet form. For example, pigments are usually manufactured in aqueous media and the resulting pigment is obtained as water wet presscake. In presscake form, the pigment is not aggregated to the extent that it is in dry form and thus take less processing time and effort Representative commercial dry and presscake pigments are known to those skilled in the art *(see e.g.,* U.S. 5,085,698).

Fine particles of metal or metal oxides also may be used to practice the invention. For example, metal and metal oxides are suitable for the preparation of magnetic ink jet inks. Fine particle size oxides, such as silica, alumina, titania, and the like, also may be selected. Furthermore, finely divided metal particles, such as copper, iron, steel, aluminum and alloys, may be selected for appropriate applications.

Dispersant The function of the polymeric dispersant is to facilitate the incorporation of the insoluble colorants (i.e., pigments and dispersed dyes) into the aqueous vehicle. Polymeric dispersants may be random or structured polymeric dispersants, examples of the latter including AB, BAB and ABC block copolymers, branched polymers and graft polymers. Structured polymer dispersants are preferred. AB block copolymer dispersants and the synthesis thereof are disclosed in US 5,085,698. ABC triblock polymers useful in preparing pigment dispersions are disclosed in EP 0 556 649 A1. Some useful graft polymer dispersants are disclosed in U.S. 5,231,131.

The amount of the dispersant used depends on its structure, molecular weight, other properties of the dispersant and the other components of the ink. The dispersant polymers selected in practicing the invention have a number average molecular weight in the range of 1,000 to 40,000, preferably 1,000 to 20,000, and typically in the range of 2,000 to 10,000. Generally speaking, me polymeric dispersant are present in the amount of 0.1 to 25%, preferably 0.1 to 8% by weight, based on the total weight of the ink composition. If the amount is 4 too high it will be difficult to maintain the desired ink viscosity. Dispersion stability will be adversely affected if insufficient polymer is present.

Star polymer additive: The star polymer additives useful in this invention are characterized as highly branched polymers with linear arms radiating out from a central core. Star polymers are a distinct type of polymer and their name is derived from their appearance - they look like a star, i.e., a plurality of arms outwardly radiating from a central point. The radial or circular appearance of star polymers distinguishes them from linear polymers like branched and graft polymers, which comprise linear backbones and linear arms. Dendrite polymers and microgels have an appearance similar to star polymers. However, dendrite polymers have branched arms whereas star polymers have linear arms. Star polymers differ from microgels in the mass distribution. In star polymers, the core comprises less than 50% of the total weight of the polymer, whereas in microgels the core is at least 50% of the total weight.

The core of the star polymer may be one atom, a small molecule, or a quasi-spherical structure and comprises less than 50% by weight of the total weight of the star polymer. Examples of quasi-spherical structures that can be used as the core of a star polymer are (a) branched polymers derived from molecules that contain difunctional C=C polymerizable groups; (b) branched polymers derived from a combination of molecules that contain both mono and difunctional C=C polymerizable groups; or (c) a condensation polymer. Star polymers with condensation polymers as the core are also referred to as "hybrid" star polymers.

The linear arms of the star polymers may be composed of monomers which have a C=C polymerizable group and include but are not limited to acrylates, methacrylates, styrene, alphamethyl styrene, dienes, and mono-olefins. The linear arms may also contain functional groups which can solubilize or disperse the stars in the aqueous solvent blends. The functional groups include, but are not limited to carboxyls, sulfates, amines, quaterniary groups, poly-ethyleneoxides groups, poly-propyleneoxide groups, and their salts.

Some useful acrylic star polymers are disclosed in U.S. 4,659,782, 4,659,783, 4,695,607, 4,746,714, 4,794,144 and 4,810,756. Some useful hybrid acrylic star polymers are disclosed in U.S. 4,847,328 and 4,851,477. The disclosures of these references are incorporated herein by reference. Particularly preferred star polymers and their method of preparation are disclosed in the examples below.

The star polymer additive may be present in the amount *of 0.5* to 20% by weight, preferably 1 to 10% by weight, based on the total weight of the ink composition. The examples below demonstrate the smear resistance property of the images printed with inks containing these star polymer additives.

### Other Ingredients

The ink may contain other ingredients known to those skilled in the art. For example, surfactants may be used to alter surface tension of the inks as well as maximize penetration of the ink into the substrate (to improve drying). However, surfactants may also destabilize the pigment dispersion for pigmented inks. The choice of a specific surfactant is also highly dependent on the type of substrate to be printed. Appropriate surfactants are readily selected for the specific substrate to be used in printing. In aqueous inks, the surfactants may be present in the amount of 0.01 to 5% and preferably 0.2 to 2%, based on the total weight of the ink.

Biocides may be used in the ink compositions to inhibit growth of microorganisms as is well known in the art. In addition, sequestering agents such as EDTA may also be included to eliminate deleterious effects of heavy metal impurities. Other known additives, such as humectants, viscosity modifiers and other acrylic or non-acrylic polymers made also be added to improve various properties of the ink compositions.

### Ink Properties

Jet velocity, separation length of the droplets, drop size, and stream stability are greatly affected by the surface tension and the viscosity of the ink. Pigmented ink jet inks suitable for use with ink jet printing systems should have a surface tension in the range of about 20 dyne/cm to about 70 dyne/cm and, more preferably, in the range 30 dyne/cm to about 70 dyne/cm. Acceptable viscosity are no greater than 20 cP, and preferably in the range of about 1.0 cP to about 10.0 cP. The ink has physical properties compatible with a wide range of ejecting conditions, i.e., driving voltage and pulse width for thermal inkjet printing devices, driving frequency of the piezo element for either a drop-on-demand device or a continuous device, and the shape and size of the nozzle. They may be used with a variety of ink jet printers such as continuous, piezoelectric drop-on-demand and thermal or bubble jet drop-on-demand, and are particularly adapted for use in thermal ink jet printers. The inks have excellent storage stability for a long period and do not clog in an ink jet apparatus. Fixing the ink on the image recording material, such as, paper, fabric, film, etc., can be carried out rapidly and accurately.

The printed ink images have clear color tones, high density, excellent water resistance and lightfastness. Furthermore, the ink does not corrode parts of the ink jet printing device it comes in contact with.

### EXAMPLES

The invention will now be further illustrated by, but not limited to, the following examples, in which parts and percentages are by weight unless otherwise noted.

### Star Polymer 1:

This shows how to prepare a star of BMA/MAA//EGDMA with a core of 4 DP units of EGDMA and arms of Mn = 5000.

A 3-liter flask was equipped with a mechanical stirrer, thermometer, N2 inlet, drying tube outlet, and addition funnels. Tetrahydrofuran ("THF"), 1149 grams, mesitylene, 5.0 grams, and initiator, 1,1-bis(trimethylsiloxy)-2-methyl propene, 38 grams (0.16 M) was charged to the flask. The catalyst, tetrabutyl ammonium m-chlorobenzoate, 1.0 gram of a 1.0 M solution in acetonitrile was injected. Feed 1 [tetrabutyl ammonium m-chlorobenzoate, 1.6 grams of a 1.0 M solution in acetonitrile], and THF, 6.2 grams, was started and added over 250 minutes. Feed II was trimethylsilyl methacrylate ("TMS-MAA"), 295 grams (1.87 M), and butyl methacrylate ("BMA"), 641.2 grams (4.52 M). It was started at 0.0 minutes and added over 45 minutes. One hundred and thirty minutes after Feed I was completed, Feed III, ethylene glycol dimethacrylate ("EGDMA"), 130 grams (0.66 M), was started and added over 10 minutes.

177 grams of dry methanol were added to the above solution and distillation was begun. During distillation an additional 178 grams of dry methanol were added. The addition of methanol deblocked the TMS-MAA and converted it into methacrylic acid ("MAA"). During the distillation 1207 grams of material were removed from the flask. 1-Methyl-2-pyrrolidinone ("NMP"), 1307 grams was added. This made a BMA/MAA//EGDMA 69/17//14 star at 32.7% solids with arms that have a Mn = 5000. The above star polymer was then neutralized (90%) by adding potassium hydroxide (23.75 grams of 45% solution) and deionized water (113.73 grams) to the polymer solution (305.72 grams) until a homogeneous solution was obtained. The material was approximately 25% solids.

### Star Polymer2: BMA/MAA//EGDMA 63/16//21 star

This shows how to prepare a star of BMA/MAA//EGDMA 63/16//21 with a core of 6 DP units of EGDMA and arms of Mn = 5000.

The same procedure was used as above except Feed II was 589.6 grams (4.15 M) of BMA and 270.8 grams (1.71 M) of TMS-MAA, and Feed III was 195 grams (0.98 M) of EGDMA. This made a BMA/MAA//EGDMA 63/16//21 star at 32.7% solids with arms that have a Mn = 5000. The polymer was then neutralized with potassium hydroxide as above. The final solids of the neutralized polymer solution was 25% solid.

### Star Polymer 3: BMA/MAA//EGDMA 60/26//14 star

This shows how to prepare a star polymer of BMA/MAA//EGDMA 60/26//14 with a core of 4 DP units of EGDMA and arms of Mn = 5000.

The same procedure was used as for Star Polymer 1 except Feed II was 564.2 grams (3.97 M) of BMA and 442.2 grams (2.8 M) of TMS-MAA. This made a BMA/MAA//EGDMA 60/26//14 star at 32.7% solids with arms that have a Mn = 5000. The polymer was then neutralized with potassium hydroxide as above. The final solids of the neutralized polymer solution was 25% solid.

### Star Polymer 4: BMA/DMAEMA//EGDMA 75/19//6 star

This shows how to prepare a star polymer of BMA/DMAEMA/EGDMA 75/19/6 with a core of 3.4 DP units of EGDMA.

A 3-liter flask was equipped with a mechanical stirrer, thermometer, N2 inlet, drying tube outlet, and addition funnels. THF, 1149 grams, mesitylene, 1.2 grams, and initiator, 1-methoxy-1-trimethylsiloxy-2-methyl -2-methyl propene, 13.4 grams, (0.08 M) was charged to the flask. The catalyst, tetrabutyl ammonium m-chlorobenzoate, 0.4 ml of a 1.0 M solution in acetonitrile was injected. Feed I was composed of dimethylaminoethyl methacrylate ("DMAEMA"), 152 grams, (0.97 M) and BMA, 608 grams (4.28 M). It was started at 0.0 minutes and added over 45 minutes. Sixty-five minutes after Feed I was completed, Feed II, EGDMA, 52.6 grams (0.27 M), was started and added over 10 minutes. One hundred minutes after completion of Feed II, 20.2 grams of methanol were added and distillation begun. During distillation 500 grams of material were removed from the flask. Isopropanol, 501 grams, was added. This made BMA/DMAEMA//EGDMA 75/19//6 star at 41.4% solid with arms that have a Mn = 10,000.

The star polymer was then quaternized with benzyl chloride as follows. A 3-liter flask was equipped with a mechanical stirrer, thermometer, N2 inlet, drying tube outlet, and addition funnels. The star polymer solution, 1976 grams (0.98 M of amine), was charged to the flask. Benzyl chloride, 110 grams (0.87 M) was added over 30 minutes. The polymer solution was then heated to reflux for 6 hours. The amine value drops from 1.18 milliequivalents of amine/gram of solid polymer to 0.26 milliequivalents of amine/gram of polymer. The polymer solution was 42% solid after quaternization.

### Star Polymer 5: BMA/DMAEMA//EGDMA 58.2/25//16.8 star

The procedure for Star Polymer 1 was repeated except Feed 1 was composed of 228.2 grams of DMAEMA and 532.2 grams of BMA. This made a BMA/DMAEMA//EGDMA 58.2/25//16.8 star at 41.4% solid with arms that have a Mn = 10,000. The polymer was then quaternized as in Star Polymer 4. Percent solids after quaternization are 42%.

### Star Polymer 6: BMA/DMAEMA//EGDMA 56/37//7 star

The procedure used for Star Polymer 1 was repeated except Feed 1 was 304.2 grams of DMAEMA and 456.6 grams of BMA. This made a BMA/DMAEMA//EGDMA 56/37//7 star at 41.4% solid with arms that have a Mn = 10,000. The polymer was then quaternized as in Star Polymer 4. Percent solids after quaternization are 42%.

### Star Polymer 7: 7 BMA/DMAEMA//EGDMA 37/56//7 star

The same procedure was used as in Star Polymer 1 except Feed 1 was composed of 457 grams of DMAEMA and 303.6 grams of BMA. This made a BMA/DMAEMA//EGDMA 37/56//7 star at 41.4% solids with arms that have a Mn = 10,000. The polymer was then quaternized as in Star Polymer 4. Percent solids after quaternization are 42%.

### Random Polymer 1: BMA/DMAEMA 80/20

This shows how to prepare a linear random polymer composed of BMA/DMAEMA 80/20.

A 3-liter flask was equipped with a mechanical stirrer, thermometer, N2 inlet, drying tube outlet, and addition funnels. Tetrahydrofuran, 960 grams, mesitylene, 1.09 grams and initiator, 1-methoxy-1-trimethylsiloxy-2-methyl propene, 15.7 grams (0.10 M) was charged to the flask. The catalyst, tetrabutyl ammonium m-chlorobenzoate, 0.4 ml of a 1.0 M solution in acetonitrile was injected. Feed 1 was composed of DMAEMA, 192 grams, (1.22 M) and BMA, 768 grams (5.41 M). It was started at 0.0 minutes and added over 40 minutes.

At 150 minutes, 21 grams of dry methanol were added to the above solution and distillation begins. A total of 422 grams of solvent were removed. I-propanol, 422 grams, was added after completion of the distillation. This made a BMA/DMAEMA 80/20 linear polymer at 49.5% solids and a Mn = 10,700.

The polymer was then neutralized with benzyl chloride as follows: A 3-liter flask was equipped with a mechanical stirrer, thermometer, N2 inlet, drying tube outlet, and addition funnel. 2098 grams of the Random Polymer 1 solution (1.32 M of amine), was charged to the flask. Benzyl chloride, 139 grams (1.09 M) was added over 30 minutes. The polymer solution was then heated to reflux for 9 hours. The amine value drops from 1.17 milliequivalents of amine/gram of solid polymer to 0.165 milliequivalents of amine/gram of solid polymer. Solids after neutralization is 45%.

### Random Polymer 2: BMA/DMAEMA 60/40

The same procedure was used as in Random Polymer 1 except Feed 1 was composed of 576.8 grams of BMA and 385.4 grams of DMAEMA. This made a BMA/DMAEMA 60/40 linear polymer at 49.5% solids and a Mn = 10,700. The polymer was quaternized as in Random Polymer 1. Solids after quaternization were 45%.

### Random Polymer 3: BMA/DMAEMA 40/60

The same procedure was used as in Random Polymer 1 except Feed 1 was composed of 384 grams of BMA and 576 grams of DMAEMA. This made a BMA/DMAEMA 40/60 linear polymer at 49.5% solids and a Mn = 10,700. The polymer was then quaternized as above. Solids after quaternization are 45%.

### Dispersant Polymer 1: BMA/MMA//MAA 10/5//10

This shows the preparation of a BMA/MMA//MAA 10/5//10 diblock polymer.

A 12-liter flask was equipped with a mechanical stirred, thermometer, N2 inlet, drying tube outlet, and addition funnels. THF, 3045 grams, mesitylene, 9.12 grams, and the initiator, 1,1-bis (trimethylsiloxy)-2-methyl propene, 232.7 grams (1.0 M) was charged to the flask. The catalyst, tetrabutyl ammonium m-chlorobenzoate, 2.5 ml of a 1.0 M solution in acetonitrile was injected. Feed I was composed of the catalyst, tetrabutyl ammonium m-chlorobenzoate, *2.5* ml of a 1.0 M solution in acetonitrile, and THF, 10.0 grams. Feed I was started at t = 0.0 minutes and added over 240 minutes. Feed II [TMS-MA, 1582 grams (10.0 M)] was started at t = 0.0 minutes and added over 30 minutes. One hundred and fifty minutes after Feed II was completed (over 99% of the monomers had reacted) Feed III [BMA, 1418.5 grams (10.0 M), and MMA 499.1 grams (5.0 M)], was started and added over 30 minutes. At 400 minutes, 645 grams of dry methanol were added to the above solution and distillation begun. A total of 2756 grams of solvent was removed. I-propanol, 1271 grams was added after completion of the distillation. This made a BMA/MMA//MAA 10/5//10 diblock polymer at 48.7% solids and a Mn = 3000.

### Dispersant-Polymer 2: BZMA//DMAEMA 10//20

This shows the preparation of a BZMA//DMAEMA 10//20 diblock polymer.

A-12-liter flask was equipped with a mechanical stirrer, thermometer, N2 inlet, drying tube outlet, and addition funnels. THF, 3998 grams, mesitylene, 7.4 grams, and the initiator, 1-methoxy-1-trimethylsiloxy-2-methyl propene, 155.1 grams (0.89 M), was charged to the flask. The catalyst, tetrabutyl ammonium m-chlorobenzoate, 2 grams of a 1.0 M solution in acetonitrile was injected. Feed I, DMAEMA, 2800 grams (17.83 M) was started at 0.0 minutes and added over 48 minutes. Eighty minutes after Feed I was completed (over 99% of the monomers had reacted), Feed II, benzyl methacrylate ("BZMA"), 1568 grams (8.91 M) was started and added over 30 minutes.

At 345 minutes, 315 grams of dry methanol was added to the above solution and distillation begun. A total of 1726.2 grams of solvent were removed. I-propanol, 1780 grams, was added after completion of the distillation. This made a BZMA//DMAEMA 10//20 diblock polymer at 49.1% solids and a Mn = 5000.

### Dispersant Polymer 3: BZMA//DMAEMA 5//10

This shows the preparation of a BZMA//DMAEMA 5//10 diblock polymer.

A 5-liter flask was equipped with a mechanical stirrer, thermometer, N2 inlet, drying tube outlet, and addition funnels. THF, 1217 grams, mesitylene, 5.6 grams, and the initiator, 1-methoxy-1-trimethylsiloxy-2-methyl propene, 130.9 grams (0.75 M), was charged to the flask. The catalyst, tetrabutyl ammonium m-chlorobenzoate, 1.0 gram of a 1.0 M solution in acetonitrile was injected. Feed I, was composed of catalyst, tetrabutyl ammonium m-chlorobenzoate, 1.0 gram of a 1.0 M solution in acetonitrile, and THF, 4.4 grams. Feed I was started at t = 0.0 and added over 200 minutes. Feed II, was composed of DMAEMA, 1171 grams (7.46 M). Feed II was started at t = 0.0 and added over 40 minutes. Eighty-five minutes after Feed II was completed, Feed III, BZMA, 651 grams (3.70 M), was started and added over 30 minutes. One hundred and seventy minutes after completion of Feed III, 330 grams of methanol were added and distillation begun. During distillation 1875 grams of solvent were removed form the flask. I-propanol, 480 grams was added. This made a BZMA//DMAEMA 5//10 diblock polymer at 68.2% solid and a Mn = 2500.

### Pigment Dispersion 1:

This shows the preparation of a black pigment dispersion using a BMA/MMA//MAA 10/5//10 diblock polymer.

| Ingredient | Amount (gm) |
|---|---|
| Dispersant Polymer 1 | 205.34 |
| FW-18 black pigment (Degussa Corp.) | 200.00 |
| Diethylene glycol | 100 |
| Isopropanol | 450 |

The above ingredients were mixed and the mixture was then charged to a 2 roll mill and processed for 20 minutes. This made a pigment dispersion that contained 66.7% pigment and 33.3% polymer (i.e., it had a pigment-to-dispersant ratio ("P/D") of 2/1). The 2 roll mill chip, 70 grams, was then dissolved using 8.5 grams potassium hydroxide (45.5% solids), as the neutralizing agent and then diluted with 321 grams of deionized water to make an aqueous pigment concentrate that contained 10% pigment and 2.5% diethylene glycol.

### Pigment Dispersion 2:

| Ingredient | Amount (gm) |
|---|---|
| Dispersant 2 | 203.8 |
| Heliogen Blue 7072D (Cyan Pigment Blue 15:3) | 200 |
| Isopropanol | 50 |

The above ingredients were mixed and the mixture was then charged to a 2 roll mill and processed for 60 minutes. This made a pigment dispersion that contained 66.7% pigment and 33.3% polymer (i.e., it had a pigment-to-dispersant ratio ("P/D") of 2/1). The 2 roll mill chip, 60.6 grams, was then dissolved using 8.22 grams phosphoric acid as the neutralizing agent and then diluted with 331 grams of deionized water to make an aqueous pigment concentrate that contained 9.71% cyan pigment.

### Pigment Dispersion 3:

| Ingredient | Amount (gm) |
|---|---|
| Dispersant 2 | 611.4 |
| Irgalite Yellow BL (Yellow 13) | 300 |

The above ingredients were mixed and the mixture was then charged to a 2 roll mill and processed for 30 minutes. This made a pigment dispersion that contained 50% pigment and 50% polymer (P/D = 1/1). The 2 roll mill chip, 81.2 grams, was then dissolved using 16.43 grams phosphoric acid the neutralizing agent and then diluted with 302.37 grams of deionized water to make an aqueous pigment concentrate that contained 10.2% yellow pigment.

### Pigment Dispersion 4A:

| Ingredient | Amount (gm) |
|---|---|
| Dispersant 2 | 242 |
| Paul Uhlich Rhodamine Y Toner V-1 (Violet 1) | 180 |
| Diethylene glycol | 35 |
| Isopropanol | 40 |

The above ingredients were mixed and the mixture was then charged to a 2 roll mill and processed for 30 minutes. This made a pigment dispersion that contained 60% Pigment and 40% polymer (P/D = 1.5/1). The 2 roll mill chip, 72.95 grams, was then dissolved using 10.96 grams phosphoric acid as the neutralizing agent and then diluted with 316.09 grams of deionized water to make an aqueous pigment concentrate that contained 9.48% pigment.

After neutralization and dilution Pigment Dispersion 4A was agitated for 120 minutes on a paint shaker. Following agitation, the sample was processed for 60 minutes at 3500 rpm in a minimill then filtered through Sparkler "C" paper. This gave a pigment concentrate that contained 9.48% violet pigment.

### Pigment Dispersion 4B:

| Ingredient | Amount (gm) |
|---|---|
| Dispersant 2 | 242 |
| BASE Fanal Pink D4810 (Pigment Red 169) | 180 |
| Diethylene glycol | 35 |
| Isopropanol | 60 |

The above ingredients were mixed and the mixture was then charged to a 2 roll mill and processed for 30 minutes. This made a pigment dispersion that contained 60% Pigment and 40% polymer (P/D = 1.5/1). The 2 roll mill chip, 75.16 grams, was then dissolved using 10.96 grams phosphoric acid as the neutralizing agent and then diluted with 313.88 grams of deionized water to make an aqueous pigment concentrate that contained 9.52% pigment.

After neutralization and dilution, Pigment Dispersion 4B was agitated for 120 minutes on a paint shaker. Following agitation, the sample was processed for 60 minutes at 3500 rpm in a minimill then filtered through Sparkler "C" paper. This gave a pigment concentrate that contained 9.52% red pigment.

### Pigment Dispersion 4C:

| Ingredient | Amount (gm) |
|---|---|
| Dispersant 2 | 242 |
| Sunfast Magenta R-122 (60% solid) (Pigment Red 122) | 300.5 |
| Diethylene glycol | 50 |

The above ingredients were mixed and the mixture was then charged to a 2 roll mill and processed for 40 minutes. This made a pigment dispersion that contained 60% Pigment and 40% polymer (P/D = 1.5/1). The 2 roll mill chip, 71.25 grams, was then dissolved using 10.96 grams phosphoric acid as the neutralizing agent and then diluted with 317.79 grams of deionized water to make an aqueous pigment concentrate that contained 10.55% red (magenta) pigment.

After neutralization and dilution, Pigment Dispersion 4C was agitated for 120 minutes on a paint shaker. Following agitation, the sample was processed for 60 minutes at 3500 rpm in a minimill then filtered through Sparkler "C" paper: This gave a pigment concentrate that contained 10.55% red (magenta) pigment.

### Pigment Dispersion 5:

| Ingredient | Amount (gm) |
|---|---|
| Dispersant 3 | 146.63 |
| FW-18 | 200 |
| Diethylene glycol | 100 |
| Isopropanol | 475 |

The above ingredients were mixed and the mixture was then charged to a 2 roll mill and processed for 25 minutes. This made a pigment dispersion that contained 56.03% pigment and 28.01% polymer (i.e., it had a pigment-to-dispersant ratio ("P/D") of 2/1). The 2 roll mill chip, 71.4 grams, was then dissolved using 8.6 grams phosphoric acid (86.1% solids) as the neutralizing agent and then diluted with 320 grams of deionized water to make an aqueous pigment concentrate that contained 10.14% black pigment and 2.89% diethylene glycol.

**Ink Preparation:** A series of inks having the following compositions were made:

| **Sample** | **Pigment Dispersion** | | **LEG**^{**1**} | **DEG**^{**2**} | **TMP**^{**3**} | **Binder** | | **Water** |
|---|---|---|---|---|---|---|---|---|
| | No. | Amt. | | | | **Type**^{**4**} | **Amt.** | |
| Control 1 | 1 | 35 | 3.0 | 6.13 | | | | 55.87 |
| Ink 1 | 1 | 35 | 3.0 | 6.13 | | SP1 | 4.0 | 51.87 |
| Ink 2 | 1 | 35 | 3.0 | 6.13 | | SP2 | 4.0 | 51.87 |
| Ink 3 | 1 1 | 35 | 3.0 | 6.13 | | SP3 | 4.0 | 51.87 |
| ink 4 | 1 | 35 | 3.0 | 6.13 | | SP1 | 20.0 | 35.87 |
| Ink 5 | 1 | 35 | 3.0 | 6.13 | | SP2 | 20.0 | 35.87 |
| Ink 6 | 1 | 35 | 3.0 | 6.13 | | SP3 | 20.0 | 35.87 |
| Control 2 | 1 | 20.0 | 3.0 | 6.5 | | | | 70.5 |
| Ink 7 | 1 | 20.0 | 3.0 | 6.5 | | SP1 | 12 | 58.5 |
| Ink 8 | 1 | 20.0 | 3.0 | 6.5 | | SP2 | 12 | 58.5 |
| Ink 9 | 1 | 20.0 | 3.0 | 6.5 | | SP1 | 20 | 50.5 |
| Ink 10 | 1 | 20.0 | 3.0 | 6.5 | | SP2 | 20 | 50.5 |
| Control 3 | 2 | 15.45 | | | 18.0 | | | 66.55 |
| Control 4 | 3 | 29.41 | | | 18.0 | | | 52.59 |
| Control 5 | 4A | 5.27 | | | | | | |
| | 4B | 10.5 | | | | | | |
| | 4C | 4.74 | | | 18.0 | | | 61.49 |
| Ink 11 1 | 2 | 15.45 | | | 18.0 | SP4 | 7.14 | 59.41 |
| Ink 12 | 2 | 15.45 | | | 18.0 | SP5 | 7.14 | 59.41 |
| Ink 13 | 2 | 15.45 | | | 18.0 | SP6 | 7.14 | 59.41 |
| Ink 14 | 3 | 29.41 | | | 18.0 | SP6 | 7.14 | 45.45 |
| Ink 15 | 4A | 5.27 | | | | | | |
| | 4B | 10.5 | | | | | | |
| | 4C | 4.74 | | | 18.0 | SP6 | 7.14 | 54.35 |
| Control 6 | 5 | 34.52 | 3.0 | 6.0 | | | | 56.48 |
| Ink 16 | 5 | 34.52 | 3.0 | 6.0 | | RP1 | 2.22 | 54.26 |
| Ink 17 | 5 | 34.52 | 3.0 | 6.0 | | RP1 | 6.67 | 49.81 |
| Ink 18 | 5 | 34.52 | 3.0 | 6.0 | | RP1 | 11.11 | 45.37 |
| Ink 19 | 5 | 34.52 | 3.0 | 6.0 | | RP2 | 2.22 | 54.26 |
| Ink 20 | 5 | 34.52 | 3.0 | 6.0 | | RP2 | 6.67 | 49.81 |
| Ink 21 | 5 | 34.52 | 3.0 | 6.0 | | RP2 | 11.11 | 45.37 |
| Ink 22 | 5 | 34.52 | 3.0 | 6.0 | | RP3 | 2.22 | 54.26 |
| Ink 23 | 5 | 34.52 | 3.0 | 6.0 | | RP3 | 6.67 | 49.81 |
| Ink 24 | 5 | 34.52 | 3.0 | 6.0 | | RP3 | 11.11 | 45.37 |
| Ink 25 | 5 | 34.52 | 3.0 | 6.0 | | SP4 | 2.5 | 53.98 |
| Ink 26 | 5 | 34-52 | 3.0 | 6.0 | | SP4 | 7.5 | 48.98 |
| Ink 27 | 5 | 34.52 | 3.0 | 6.0 | | SP4 | 12.5 | 43.98 |
| Ink 28 | 5 | 34.52 | 3.0 | 6.0 | | SP6 | 2.5 | 53.98 |
| Ink 29 | 5 | 34.52 | 3.0 | 6.0 | | SP6 | 7.5 | 48.98 |
| Ink 30 | 5 | 34.52 | 3.0 | 6.0 | | SP6 | 12.5 | 43.98 |
| Ink 31 | 5 | 34.52 | 3.0 | 6.0 | | SP7 | 2.5 | 53.98 |
| Ink 32 | 5 | 34.52 | 3.0 | 6.0 | | SP7 | 7.5 | 48.98 |
| Ink 33 | 5 | 34.52 | 3.0 | 6.0 | | SP7 | 12.5 | 43.98 |

| | | | | | | | | |
|---|---|---|---|---|---|---|---|---|
| Notes: 1. LEG = Liponics® EG-1, Lipo Chemical Co.,-Patterson, NJ | | | | | | | | |
| 2. DEG = diethylene glycol | | | | | | | | |
| 3. TMP = trimethylolpropane | | | | | | | | |
| 4. Binder type is identified as being either a star polymer ("SP') or a random polymer ("RP"), followed by the number from the preparations described above. | | | | | | | | |

### Testing:

Optical Density: The optical density of a printed image was determined using various of the sample inks. Optical density was measured using a Macbeth Densitomiter. The inks were printed with a Hewlett-Packard Deskjet® 500C ink jet printer.

| **Sample** | **% Polymer Addition** | **% Pigment** | **Optical Density** |
|---|---|---|---|
| Control 1 | 0 | 3.5 | 1.10 |
| Control 2 | 0 | 2 | 0.95 |
| Ink 1 | 1 | 3.5 | 1.20 |
| Ink 2 | 1 | 3.5 | 1.25 |
| Ink 3 | 1 | 3.5 | 1.20 |
| Ink 4 | 5 | 3.5 | 1.65 |
| Ink 5 | 5 | 3.5 | 1.40 |
| Ink 6 | 5 | 3.5 | 1.55 |
| Ink 7 | 3 | 2 | 1.20 |
| Ink 8 | 3 | 2 | 1.25 |
| Ink 9 | 5 | 2 | 1.40 |
| Ink 10 | 5 | 2 | 1.45 |

The above data indicates that the addition of star polymer increased the optical density of the printed image. The increase was sufficient to maintain optical density even when the pigment concentration of the ink was reduced from 3.5% to 2.0%. This would enable one to formula inks with lower pigment content, which is expected to improve the stability of the ink.

Waterfastness: To test waterfastness, a series of 1/4 inch wide lines were printed. Five milliliters of water were dripped across the lines and the optical density of the washoff was measured. Waterfastness was measured 1 hour, and 24 hours after printing. Optical density of the washoff was measured with a Hunter Lab LS5100, III c and a 0/45 source/view. A lower optical density of the washoff (reported in milli optical density units or "mOD") indicates better waterfastness properties. The results show that the addition of the star polymer improves the waterfastness of the printed inks. Ink #11 was significantly better than the control.

| | | **Waterfastness (mOD)** | |
|---|---|---|---|
| **Sample** | **Optical Density** | **@ 1 Hour** | **@ 24 Hours** |
| Control 3 | 0.7 | 230 | 210 |
| Ink 11 | 0.47 | 40 | 10 |
| Ink 12 | 0.66 | 130 | 50 |
| Ink 13 | 0.72 | 190 | 180 |

A similar test was performed to compare inks containing linear random polymer additives versus inks containing star polymer additives. The following data establishes that waterfastness is improved with star polymers versus linear polymer additives. This waterfastness test was performed 4 hours after printing. Waterfastness was rated on a scale of 0-5. A score of 0 indicates that there was no dripping or runoff from the water. A score of 2 or higher is not acceptable for commercial quality inks.

| | **Polymer Additive (wt %)** | | |
|---|---|---|---|
| **Sample** | **Linear** | **Star** | **Waterfastness** |
| Ink 16 | 1 | | 0.5 |
| Ink 19 | 1 | | 0.5 |
| Ink 22 | 1 | | 4 |
| Ink 25 | | 1 | 0.5 |
| Ink 28 | | 1 | 0 |
| Ink 31 | | 1 | 0 |
| Ink 17 | 3 | | 0 |
| Ink 20 | 3 | | 4 |
| Ink 23 | 3 | | 4 |
| Ink 26 | | 3 | 0 |
| Ink 29 | | 3 | 1 |
| Ink 32 | | 3 | 1 |
| Ink 18 | 5 | | 0 |
| Ink 21 | 5 | | 5 |
| Ink 24 | 5 | | 5 |
| Ink 27 | | 5 | 0 |
| Ink 30 | | 5 | 3 |
| Ink 33 | | 5 | 4 |

**Chroma:** The following inks were printed using a Hewlett-Pacard Deskjet 500C printer onto Gilbert Bond paper (25% cotton, Mead Co., Dayton, Ohio). Chroma was measured with a Hunter Lab LS5100, III C, and a 0/45 source/view. The results show that the addition of the star polymer increases the chroma of the printed ink in both the primary (cyan, yellow, and magenta) as well as secondary (red, green, and blue) colors.

| **Ink** | **Color** | **Chroma** | **delta C** |
|---|---|---|---|
| Control 3 3 | cyan | 39 | - |
| Ink 13 | cyan | 39 | 0 |
| Control 4 | yellow | 80 | - |
| Ink 14 | yellow | 84 | 4 |
| Controls | magenta | 65 | - |
| Ink 15 | magenta | 67 | 2 |
| Control set 3,4,5 | red | 59 | - |
| Ink set 13,14,15 | red | 64 | 5 |
| Control set 3,4,5 | green | 43 | - |
| Ink set 13,14,15 | green | 45 | 2 |
| Control set 3,4,5 | blue | 51 | - |
| Ink set 13,14,15 | blue | 52 | 1 |

## Claims

1. An ink jet ink comprising:
a) an aqueous vehicle,
b) a colorant,
c) a polymeric dispersant and
d) a star polymer additive.

2. The ink jet ink of claim 1, **characterized in that** the polymeric dispersant is selected from the group consisting of random polymers, AB, BAB and ABC block copolymers, branched polymers and graft polymers.

3. The ink jet ink of claim 1 or claim 2, **characterized in that** the colorant is an insoluble colorant.

4. The ink jet ink of claim 3, **characterized in that** the insoluble colorant is a pigment.

5. The ink jet ink of claim 1 or claim 2, **characterized in that** the star polymer additive comprises:
- a core selected from the group consisting of branched polymers derived from molecules that contain difunctional C=C polymerizable groups, branched polymers derived from a combination of molecules that contain both mono and difunctional C=C polymerizable groups, and a condensation polymer; and
- linear polymeric arms having a molecular weight range of 1,000 to 100,000, and comprising monomers which have a C=C polymerizable group.

6. The ink jet ink of claim 5, **characterized in that** the monomers comprised in the linear polymeric arms are selected from acrylates, methacrylates, stryene, modified styrenes, alphamethyl styrene, modified alpha methyl styrenes, dienes, and mono-olefines.

7. The ink jet ink of claim 5, **characterized in that** the linear polymeric arms contain functional groups which can solubilize or disperse the star polymer additive in the aqueous vehicle.

8. The ink jet ink of claim 7, **characterized in that** the functional groups are selected from carboxyls, sulfates, amines, quatemiary groups, poly-ethyleneoxides groups, poly-propyleneoxide groups, and their salts.

9. The ink jet ink of claim 1 or claim 2, **characterized in that** the star polymer additive is present in the amount of 0.5 to 20% by weight, and the polymeric dispersant is present in the amount of 0.1 to 25% by weight, based on the total weight of the ink composition.

10. The ink jet ink of claim 9, **characterized in that** the star polymer additive is present in the amount of 1 to 12% by weight, and the polymeric dispersant is present in the amount of 0.1 to 8% by weight, based on the total weight of the ink composition.

## Patentansprüche

1. Tintenstrahldrucktinte, umfassend:
a) ein wässeriges Vehikel,
b) ein Färbemittel,
c) ein polymeres Dispergiermittel,
d) einen sternförmigen Polymerzusatz.

2. Tintenstrahldrucktinte nach Anspruch 1, **dadurch gekennzeichnet, daß** das polymere Dispergiermittel aus der Gruppe, bestehend aus statistischen Polymeren, AB-, BAB- und ABC-Blockcopolymeren, verzweigten Polymeren und Pfropfpolymeren, ausgewählt ist.

3. Tintenstrahldrucktinte nach Anspruch 1 oder Anspruch 2, **dadurch gekennzeichnet, daß** das Färbemittel ein unlösliches Färbemittel ist.

4. Tintenstrahldrucktinte nach Anspruch 3, **dadurch gekennzeichnet, daß** das unlösliche Färbemittel ein Pigment ist.

5. Tintenstrahldrucktinte nach Anspruch 1 oder Anspruch 2, **dadurch gekennzeichnet, daß** der sternförmige Polymerzusatz umfaßt:
- einen Kern, ausgewählt aus der Gruppe, bestehend aus verzweigten Polymeren, abgeleitet von Molekülen, die difunktionelle polymerisierbare C=C-Gruppen enthalten, verzweigten Polymeren, abgeleitet von einer Kombination von Molekülen, die sowohl mono- als auch difunktionelle polymerisierbare C=C-Gruppen enthalten, und einem Kondensationspolymer, und
- lineare polymere Arme mit einem Molekulargewichtsbereich von 1000 bis 100000 und umfassend Monomere, welche eine polymerisierbare C=C-Gruppe aufweisen.

6. Tintenstrahldrucktinte nach Anspruch 5, **dadurch gekennzeichnet, daß** die Monomere, umfaßt in den linearen polymeren Armen, aus Acrylaten, Methacrylaten, Styrol, modifizierten Styrolen, alpha-Methylstyrol, modifizierten alpha-Methylstyrolen, Dienen und Monoolefinen ausgewählt sind.

7. Tintenstrahldrucktinte nach Anspruch 5, **dadurch gekennzeichnet, daß** die linearen polymeren Arme funktionelle Gruppen enthalten, welche den sternförmigen Polymerzusatz in dem wässerigen Vehikel solubilisieren oder dispergieren können.

8. Tintenstrahldrucktinte nach Anspruch 7, **dadurch gekennzeichnet, daß** die funktionellen Gruppen aus Carboxylen, Sulfaten, Aminen, quaternären Gruppen, Polyethylenoxidgruppen, Polypropylenoxidgruppen und ihren Salzen ausgewählt sind.

9. Tintenstrahldrucktinte nach Anspruch 1 oder Anspruch 2, **dadurch gekennzeichnet, daß** der sternförmige Polymerzusatz in dem Anteil von 0,5 bis 20 Gew.-% vorhanden ist und das polymere Dispergiermittel in dem Anteil von 0,1 bis 25 Gew.-% vorhanden ist, bezogen auf das Gesamtgewicht der Tintenzusammensetzung.

10. Tintenstrahldrucktinte nach Anspruch 9, **dadurch gekennzeichnet, daß** der sternförmige Polymerzusatz in dem Anteil von 1 bis 12 Gew.-% vorhanden ist und das polymere Dispergiermittel in dem Anteil von 0,1 bis 8 Gew. -% vorhanden ist, bezogen auf das Gesamtgewicht der Tintenzusammensetzung.

## Revendications

1. Encre pour imprimante à jet d'encré, comprenant:
a) un véhicule aqueux
b) un colorant,
c) un dispersant polymère, et
d) un additif polymère en étoile.

2. Encre pour imprimante à jet d'encre suivant la revendication 1, **caractérisée en ce que** le dispersant polymère est sélectionné parmi le groupe composé de polymères aléatoires, de copolymères blocs AB, BAB, et ABC, de polymères ramifiés et de polymères greffés.

3. Encre pour imprimante à jet d'encre suivant la revendication 1 ou la revendication 2, **caractérisée en ce que** le colorant est un colorant insoluble.

4. Encre pour imprimante à jet d'encre suivant la revendication 3, **caractérisée en ce que** le colorant insoluble est un pigment.

5. Encre pour imprimante à jet d'encre suivant la revendication 1 ou la revendication 2, **caractérisée en ce que** l'additif polymère en étoile comprend:
- un noyau sélectionné parmi le groupe composé de polymères branchés dérivés à partir de molécules qui contiennent des groupes polymérisables C=C bi-fonctionnels, de polymères ramifiés dérivés à partir d'une combinaison de molécules qui contiennent à la fois des groupes polymérisables C=C mono- et bi-fonctionnels, et d'un polymère de condensation, et
- des branches de polymère linéaires présentant un poids moléculaire compris entre 1000 et 100000 et comprenant des monomères contenant un groupe polymérisable C=C.

6. Encre pour imprimante à jet d'encre suivant la revendication 5, **caractérisée en ce que** les monomères compris dans les branches de polymère linéaires sont sélectionnés parmi les acrylates, les méthacrylates, les styrènes, les styrènes modifiés, les alpha-méthylstyrènes, les alpha-méthylstyrènes modifiés, les diènes et les mono-oléfines.

7. Encre pour imprimante à jet d'encre suivant la revendication 5, **caractérisée en ce que** les branches de polymère linéaires contiennent des groupes fonctionnels qui peuvent solubiliser ou disperser l'additif polymère en étoile dans le véhicule aqueux.

8. Encre pour imprimante à jet d'encre suivant la revendication 7, **caractérisée en ce que** les groupes fonctionnels sont sélectionnés parmi les carboxyles, les sulfates, les amines, les groupes quaternaires, les groupes de poly-oxydes d'éthylène, les groupes de poly-oxydes de propylène et leurs sels.

9. Encre pour imprimante à jet d'encre suivant la revendication 1 ou la revendication 2, **caractérisée en ce que** l'additif polymère en étoile est présent en une quantité comprise entre 0,5 % et 20 % en poids, et le dispersant polymère est présent en une quantité comprise entre 0,1 % à 25 % en poids, sur la base du poids total de la composition d'encre.

10. Encre pour imprimante à jet d'encre suivant la revendication 9, **caractérisée en ce que** l'additif polymère en étoile est présent en une quantité comprise entre 1 % et 12 % en poids, et le dispersant polymère est présent en une quantité comprise entre 0,1 % et 8 % en poids, sur la base du poids total de la composition d'encre.
